# EUROPÄISCHE PATENTSCHRIFT

(11) **EP 3 970 592 B1**
(45) Veröffentlichungstag und Bekanntmachung des Hinweises auf die Patenterteilung: **14.08.2024**
(21) Anmeldenummer: 21172049.5
(22) Anmeldetag: 04.05.2021
(51) Int. Cl.: A47L 15/24, B25J 11/00, A47L 15/00, B25J 15/00, B25J 15/02, B25J 15/12

(54) **SYSTEM ZUM BELADEN EINER SPÜLMASCHINE, GREIFERSYSTEM FÜR EINE BELADEANORDNUNG ZUM BELADEN EINER SPÜLMASCHINE SOWIE SPÜLMASCHINE**
DISHWASHER, SYSTEM FOR LOADING A DISHWASHER AND GRIPPER SYSTEM FOR A LOADING ARRANGEMENT FOR LOADING A DISHWASHER
SYSTÈME DE CHARGEMENT D'UN LAVE-VAISSELLE, SYSTÈME DE PRÉHENSION POUR UN DISPOSITIF DE CHARGEMENT PERMETTANT DE CHARGER UN LAVE-VAISSELLE, AINSI QUE LAVE-VAISSELLE

(30) Priorität: 28.05.2020 DE 102020114362
(43) Veröffentlichungstag der Anmeldung: 23.03.2022
(73) Patentinhaber: Illinois Tool Works, Inc., Glenview, Illinois 60025 (US)
(72) Erfinder: SCHREMPP, Martin, Glenview, Illinois, 60025 (US); PFEFFER, Marco, Glenview, Illinois, 60025 (US); BOLDT, Adrian, Glenview, Illinois, 60025 (US)
(74) Vertreter: Meissner Bolte Partnerschaft mbB

(56) Entgegenhaltungen:
- EP-A1- 3 930 969
- WO-A1-2016/037288
- CN-A- 110 802 622
- US-A1- 2019 375 114

## Beschreibung

Die vorliegende Erfindung betrifft allgemein das Fachgebiet des gewerblichen Spülens. Insbesondere betrifft die Erfindung ein System zum Beladen einer Spülmaschine, welche als insbesondere gewerbliche Transportspülmaschine ausgeführt ist.

Die Druckschrift US 2019/375114 A1 betrifft ein Greifersystem gemäss dem Oberbegriff des Anspruchs 1 mit einem Parallelgreifer, der zwei Spannbacken aufweist, zwischen denen ein Greifbereich des Parallelgreifers definiert wird. Eine der beiden Spannbacken ist derart segmentiert, dass die Spannbacke zumindest bereichsweise an eine Oberflächenkontur eines von dem Parallelgreifer zu greifenden Spülgutteils anpassbar ist.

Transportspülmaschinen (conveyor warewasher) finden im gewerblichen Bereich Anwendung. Im Gegensatz zu Haushaltsspülmaschinen, in welchen das zu reinigende Spülgut während der Reinigung ortsfest in der Maschine verbleibt, findet bei Transportspülmaschinen ein Transport des Spülguts durch verschiedene Behandlungszonen der Maschine statt.

Bei Transportspülmaschinen wird das Spülgut (wash wäre), wie beispielsweise Tabletts, Geschirr, Töpfe, Gläser, Besteck und andere zu reinigende Utensilien, durch mehrere Behandlungszonen, wie z. B. Vorwaschzone(n), Hauptwasch-zone(n), Nachwasch- bzw. Vorspülzone(n), Klarspülzone(n) und Trocknungs-zone(n), gefördert. Für den Transport von Spülgut in einer Transportrichtung durch die Transportspülmaschine kommt eine Transportvorrichtung zum Einsatz, die in der Regel Fächer zur Aufnahme von Spülgut aufweist. Bei einer Bandtransportspülmaschine können die Fächer durch Stützfinger auf einem Transportband der Transportvorrichtung gebildet sein. Bei Korbtransportspülmaschinen dienen als Transportvorrichtung Geschirrkörbe, in denen zur Aufnahme des zu behandelnden Spülguts Fächer ausgebildet sein können. Denkbar hierbei ist es, dass die Geschirrkörbe mit einer Fördereinrichtung durch die Korbtransportspülmaschine transportiert werden.

Üblicherweise wird das zu reinigende Spülgut vor dem Einstellen in das Transportband vorsortiert. Beispielsweise ist aus der Druckschrift US 6,530,996 B2 eine Korbtransportspülmaschine bekannt, bei welcher das zu behandelnde Spülgut vorsortiert in Geschirrkörben den jeweiligen Behandlungszonen zugeführt wird.

Transportspülmaschinen werden insbesondere in großen Einrichtungen, wie Mensen und Kantinen eingesetzt, um große Mengen an verschmutztem Spülgut möglichst wirtschaftlich zu reinigen. Mit Transportspülmaschinen der derzeit bekannten Art können mehrere hundert Gedecksätze pro Stunde gereinigt werden. Untersuchungen haben gezeigt, dass im Durchschnitt jeder Gedecksatz in der Regel aus einem Tablett, einem Teller, ein bis zwei Schälchen, einem Trinkglas sowie einem Bestecksatz besteht.

In fast sämtlichen Großküchen, wie beispielsweise Betriebskantinen oder Mensen, wird das von den Essensteilnehmern genutzte Spülgut (Geschirr, Trinkgläser, Besteck, etc.) auf Tabletts zurückgegeben. Von der Rückgabestation werden die Gedecksätze in die Spülküche transportiert. Üblicherweise erfolgt der Transport der Gedecksätze mit einem entsprechenden Zufuhrförderband. Dabei wird der Gedecksatz mit einem Förderband von der Rückgabestation in die Spülküche direkt zu einem Beladebereich der Transportspülmaschine befördert.

Im Belade- bzw. Zulaufbereich der Transportspülmaschine werden dann üblicherweise die Spülgutteile manuell vom Bedienpersonal abgenommen und in das Transportband der Transportspülmaschine einsortiert.

Im Hinblick auf Tabletts oder tablettartige Gegenstände geschieht die Vorsortierung üblicherweise derart, dass der Geschirr- und Bestecksatz von dem Bedienpersonal manuell von einem zu reinigenden Tablett abgenommen wird und das Tablett anschließend vor der Transportvorrichtung bzw. im Zulaufbereich (Schmutzseite) der Transportspülmaschine gestapelt wird. Die Tabletts aus diesem Tablettstapel werden von Zeit zu Zeit sortenrein in das Transportband der Transportspülmaschine eingestellt und gereinigt.

Dieses sortenreine Vorgehen hat den Vorteil, dass Tabletts keinen Sprühschatten auf kleinere, hinter den Tabletts eingestapelten Spülgutteile werfen können. Weiterhin ist durch dieses Vorgehen der Arbeitsablauf des Ein- und Abstapelns stark vereinfacht und effizienter im Vergleich zu einer durch Mischung des Spülguts mit den zu reinigenden Tabletts.

Während die Tabletts aus diesem Tablettstapel sortenrein in das Transportband der Transportspülmaschine eingestellt und gereinigt werden, ist es allerdings nicht möglich, anderes Spülgut zu reinigen, wie beispielsweise Teller, Schälchen oder anderes Geschirr, da die in das Transportband einzustellenden Tabletts üblicherweise quer zur Transportrichtung in das Transportband eingestellt werden müssen und so die gesamte zur Verfügung stehende Fläche des Transportbandes ausfüllen. Im Vergleich zu anderen Spülgutarten muss von daher für die Reinigung von Tabletts relativ viel Zeit aufgewendet werden.

Weiterhin muss das Bedienpersonal der Transportspülmaschine am Maschineneinlass jedes Tablett zwei Mal in seinen Arbeitsablauf einbinden: das erste Mal beim Abnehmen der Besteck- und Geschirrteile von dem zu reinigenden Tablett, und das zweite Mal beim eigentlichen Einstellen der Tabletts in das Transportband der Transportspülmaschine.

Bei dem beschriebenen Arbeitsprozess ist der manuelle Aufwand besonders hoch. Jedes Spülgutteil (Geschirrteil) eines jeden Gedecksatzes muss einzeln manuell vom Tablett abgenommen und in das Transportband der Spülmaschine eingestellt werden.

Ferner, müssen die einzelnen Besteckteile je Gedecksatz manuell von dem Tablett entnommen und ebenfalls der Transportspülmaschine zugeführt werden.

Anschließend erfolgt die zuvor beschriebene Behandlung der eigentlichen Tabletts.

Bei einer Maschinenkapazität von mehreren tausend Tellern pro Stunde muss insbesondere möglichst schnell und effizient gearbeitet werden, wodurch die körperliche Belastung des Bedienpersonals steigt.

Auf Grundlage der oben beschriebenen Problemstellung liegt der vorliegenden Erfindung die Aufgabe zugrunde, eine Lösung für eine Transportspülmaschine der zuvor genannten Art anzugeben, bei welcher es möglich ist, den gesamten Wasch- und Spülprozess effizienter zu gestalten, wodurch insbesondere die Arbeitszeit des Spülpersonals gekürzt und der Ressourcenverbrauch der Spülmaschine reduziert werden kann.

Diese Aufgabe wird erfindungsgemäß insbesondere durch den Gegenstand des unabhängigen Patentanspruchs 1 gelöst, wobei vorteilhafte Weiterbildungen des erfindungsgemäßen Beladesystems in den entsprechenden abhängigen Patentansprüchen angegeben sind.

Demgemäß betrifft die Erfindung insbesondere ein System zum vorzugsweise automatischen oder zumindest teil-automatischen Beladen einer insbesondere gewerblichen Transportspülmaschine, wobei das erfindungsgemäße Beladesystem ein Zufuhrförderband zum Zuführen von Spülgut zu einem Beladebereich der Transportspülmaschine und eine Beladeanordnung zum vorzugsweise automatischen Beladen der Transportspülmaschine mit Spülgut aufweist.

Erfindungsgemäß ist in diesem Zusammenhang insbesondere vorgesehen, dass die Beladeanordnung ein Greifersystem mit mindestens einem Parallelgreifer aufweist, wobei der mindestens eine Parallelgreifer mindestens zwei Spannbacken aufweist, zwischen denen ein Greifbereich des Parallelgreifers definiert wird.

Greifersysteme, die mindestens einen Parallelgreifer aufweisen, sind - zumindest dem Prinzip nach - allgemein beispielsweise aus der Greifertechnik als EOAT-Vorrichtungen (EOAT = End-Of-Arm-Tools) bekannt und werden häufig im Zusammenhang mit Industrierobotern zum Handhaben von Gegenständen/Teilen/Werkstücken eingesetzt. Üblicherweise weisen solche EOAT-Vorrichtungen mindestens zwei zangenförmig gegeneinander verschwenkbare oder längs geeigneter Führungen linear gegeneinander verschiebbare Greifbacken auf, die einen zu greifenden Gegenstand bzw. ein zu greifendes Teil/Werkstück mit einander zugewandten Greiferflächen von entgegengesetzten Seiten her erfassen und einspannen.

Derartige EOAT-Vorrichtungen erfüllen somit die Funktion des Erfassens und Haltens und stellen die Verbindung zwischen einem Roboterarm und dem Werkstück/Gegenstand/Teil her. Ausschlaggebend für eine sichere Verbindung sind dabei die Art der Wirkpaarung und die Anzahl der Kontaktebenen. Die Wirkpaarung kann über Kraft-, Form- oder Stoffpaarung erzielt werden. Beim Einsatz einer Kraftpaarung wird der Halt durch das Ausüben eines Drucks auf die Werkstückoberfläche erzeugt. Im Gegensatz hierzu erfolgt bei der Formpaarung das Halten über eine formgleiche Umschließung des Werkstücks.

Obgleich Greifersysteme mit Parallelgreifern allgemein aus der Fertigungsindustrie speziell bei der Montage bekannt sein mögen, sind derartige Greifersysteme nicht oder zumindest nicht ohne weiteres als Teil einer Beladeanordnung zum vorzugsweise automatischen Beladen einer Spülmaschine mit Spülgutteilen einsetzbar. Dies liegt insbesondere daran, dass herkömmliche, als EOAT-Vorrichtung ausgeführte Greifersysteme insbesondere im Hinblick auf die Formgebung und die Position und Ausrichtung des zu manipulierenden Greifguts speziell ausgebildet sind. So dienen herkömmliche, als EOAT-Vorrichtung ausgeführte Greifersysteme beispielsweise bei der Montage in der Regel dazu, vorab festgelegtes Greifgut einer bestimmten Größe und Formgebung an einer bestimmten, vorab festgelegten Greifposition zu erfassen, um dann das Greifgut an einer anderen vorab festgelegten Position abzulegen. Dabei ist das Greifersystem insbesondere im Hinblick auf das zu manipulierende Greifgut ausgebildet, insbesondere im Hinblick auf die Größe, Formgebung und Material des Greifguts.

Eine derartige im Hinblick auf das Greifgut spezialisierte Auslegung des Greifersystems ist bei einer Beladeanordnung zum automatischen Beladen einer Transportspülmaschine mit Spülgut nicht realisierbar. Grund hierfür ist, dass eine automatisch arbeitende Beladeanordnung einer Transportspülmaschine ausgebildet sein muss, dass diese eine Vielzahl unterschiedlicher Spülgutteile (unterschiedlich im Hinblick auf Größe, Formgebung, Gewicht und Material) handhaben können muss, um eine automatische Beladung einer Transportspülmaschine realisieren zu können.

Mit anderen Worten, beim gewerblichen Spülen ist es zum automatischen Beladen einer Transportspülmaschine mit Spülgutteilen nicht möglich, ein Greifersystem zu verwenden, welches im Hinblick auf ein zu manipulierendes Spülgutteil optimiert ist. Vielmehr muss das Greifersystem ausgebildet sein, eine Vielzahl unterschiedlicher Arten von Spülgutteilen (wie beispielsweise kleine Teller, große Teller, Schalen, Schüsseln, Gläser, etc.) handhaben zu können.

Genau hier setzt die Erfindung an und schlägt vor, dass die Beladeanordnung ein Greifersystem mit mindestens einem Parallelgreifer aufweist, wobei der mindestens eine Parallelgreifer mindestens zwei Spannbacken oder Greiffinger aufweist, zwischen denen ein Greifbereich des Parallelgreifers definiert wird. Um unterschiedliche Spülgutarten mit dem Parallelgreifer handhaben zu können, insbesondere unterschiedlich große und/oder unterschiedlich geformte Spülgutteile, ist erfindungsgemäß vorgesehen, dass mindestens eine der mindestens zwei Spannbacken/Greiffinger des Parallelgreifers derart segmentiert ist, dass die mindestens eine Spannbacke/der mindestens eine Greiffinger zumindest bereichsweise an eine Oberflächenkontur eines von dem mindestens einen Parallelgreifer zu greifenden Spülgutteils anpassbar ist.

Durch diese Maßnahme ist es möglich, dass mit dem Parallelgreifer eine Vielzahl unterschiedlicher Spülgutarten manipuliert werden kann. Damit eignet sich das erfindungsgemäße Beladesystem zum vorzugsweise automatischen oder zumindest teil-automatischen Beladen einer insbesondere gewerblichen Transportspülmaschine.

Indem der Parallelgreifer mindestens eine Spannbacke bzw. mindestens einen Greiffinger aufweist, der zumindest bereichsweise an eine Oberflächenkontur eines von dem Parallelgreifer zu greifenden Spülgutteils anpassbar ist, kann der Parallelgreifer zuverlässig die Funktion des Erfassens und Haltens von unterschiedlichen Spülgutteilen erfüllen.

Eine sichere Verbindung zwischen dem Parallelgreifer und dem zu manipulierenden Spülgutteil ist aufgrund der realisierbaren Wirkpaarungsart und der mit dem Parallelgreifer realisierbaren Anzahl an Kontaktebenen möglich. Die Wirkpaarung wird dabei insbesondere über eine Kombination einer Kraft- und Formpaarung erzielt.

Mit anderen Worten, der Halt des Spülgutteils durch den Parallelgreifer wird durch das Ausüben eines Druckes auf die Spülgutteiloberfläche erzeugt. Gleichzeitig erfolgt in Folge der Formpaarung das Halten über eine insbesondere bereichsweise formgleiche Umschließung des Spülgutteils.

Vorzugsweise wird für das Greifersystem der Beladeanordnung bewusst ein mit einem elektromotorischen Antrieb betätigbarer Parallelgreifer als Effektor vorgeschlagen, obgleich derartige elektromotorisch betriebene Parallelgreifer in der Greifertechnik zum Greifen und Manipulieren von Greifstücken eher unüblich sind. Vielmehr werden in der Greifertechnik zu diesem Zweck in erster Linie pneumatisch betriebene Effektoren, insbesondere in Gestalt sogenannter Sauggreifer, zum Handhaben von Greifstücken vorgeschlagen.

Derartige Sauggreifer werden in der Regel dazu verwendet, um Gegenstände anzusaugen, anzuheben und an einen anderen Ort verbringen zu können. Hierfür weist ein Sauggreifer in der Regel mindestens einen flexiblen Saugnapf auf, der einen an eine Unterdruckquelle anschließbaren Saugraum begrenzt und einen eine Saugöffnung umgrenzenden vorderen Endbereich sowie einen gegenüberliegenden hinteren Endbereich aufweist. Die Saugöffnung des Saugnapfs ist in der Regel mit einer Dichtlippe gebildet, die an der Oberfläche des zu handhabenden Gegenstandes anliegt bzw. anlegbar ist und dann zwischen dem Saugnapf und der Oberfläche des Gegenstandes einen Saugraum umschließt, welcher entsprechend evakuiert werden kann. Dadurch legt sich der Saugnapf dicht an die Oberfläche des Gegenstandes an und hält diesen pneumatisch fest.

Allerdings hat es sich beim Einsatz eines derartigen Sauggreifers in der Spültechnik gezeigt, dass Sauggreifer bei der Handhabung von Spülgutteilen nicht geeignet sind, da insbesondere bei der Handhabung von verschmutzten Spülgutteilen die Gefahr besteht, dass Speisereste etc., welche sich auf den zu handhabenden Spülgutteilen, wie Tellern und Schälchen, befinden, beim Evakuieren des Saugraums die mit dem Saugraum pneumatisch verbundenen Vakuumleitungen verstopfen, so dass ein sicheres Greifen der Spülgutteile nicht mehr gewährleistet ist.

Aus der Greifertechnik sind ferner pneumatisch betätigte Greifzangen bekannt.

Aber auch derartige Zangen sind für den Einsatz als Effektor beim Beladebereich einer Transportspülmaschine - wenn überhaupt - nur bedingt einsetzbar, da die Greifzangen in der Regel nur über einen eingeschränkten Greifbereich verfügen, was es nicht möglich macht, größere Spülgutteile, wie beispielsweise Teller, Tassen oder Schalen, sicher zu greifen.

Ein weiterer Nachteil der aus der Greifertechnik bekannten pneumatisch betätigten Greifzangen ist darin zu sehen, dass diese als Betriebsmedium Druckluft benötigen, welche in der Regel nicht in Spülküchen verfügbar ist.

Darüber hinaus ermöglichen pneumatisch betriebene Greifzangen in der Regel nur zwei Stellungen, nämlich die Offenstellung und Schließstellung, was verhindert, dass pneumatisch betätigte Greifzange für eine Vielzahl unterschiedlicher Spülgutarten, insbesondere unterschiedlicher Größe und/oder unterschiedlicher Formgebung, verwendbar sind.

Aus diesem Grund wird erfindungsgemäß als Effektor vorzugsweise ein elektromotorisch betriebener Parallelgreifer zum automatischen Beladen der Transportspülmaschine mit Spülgut vorgeschlagen. Bei einem solchen Parallelgreifer sind die zugehörigen Spannbacken/Greiffinger zumindest teilweise mit Hilfe eines elektromotorischen Antriebs beliebig über einen Greifbereich des Parallelgreifers einstellbar.

Ein weiterer Vorteil bei der Verwendung eines elektromotorisch betriebenen Parallelgreifers ist darin zu sehen, dass der als Parallelgreifer ausgeführte Effektor in einer einfach zu realisierenden Weise mit einer Selbsthemmung ausgeführt werden kann, so dass dieser im spannungsfreien Zustand das gegriffene Spülgutteil festhält, ohne in eine Offenstellung zu übergehen.

Gleichwohl ist die Erfindung jedoch nicht auf Parallelgreifer beschränkt, dessen Spannbacken/Greiffinger mit Hilfe eines elektromotorischen Antriebs verstellbar sind. Vielmehr soll die vorliegende Erfindung allgemein Parallelgreifer betreffen, dessen Spannbacken - wie auch immer - automatisch verstellbar sind.

Mit dem erfindungsgemäßen Beladesystem können die zur Beladung der Transportspülmaschine notwendigen manuellen Handhabungsschritte deutlich reduziert werden, da mit Hilfe des Greifersystems in effizienter Weise nicht nur Teller, sondern auch Schälchen oder aber auch Gläser oder anderes Spülgut automatisch in die Transportspülmaschine einsortiert werden können.

Auf diese Weise können insgesamt somit manuelle Arbeitsschritte und damit der Arbeitsaufwand für das Spülpersonal eingespart werden, da das Spülpersonal im Idealfall die Transportspülmaschine nicht mehr manuell beladen muss. Insbesondere gewährleistet das erfindungsgemäße Beladesystem eine möglichst ergonomische und benutzerfreundliche Bedienung der Transportspülmaschine, da ein manuelles Beladen der Spülgutteile und insbesondere von Tellern oder Tassen bzw. Schälchen in die Transportspülmaschine nicht mehr erforderlich ist.

Zusätzlich kann mit dem erfindungsgemäßen Beladesystem das Reinigungsergebnis der Spülmaschine verbessert werden, da mit Hilfe der Beladeanordnung automatisch sämtliches Spülgut einer festgelegten oder festlegbaren Spülgutgruppe einheitlich auf einem entsprechend zugeordneten Transportband bzw. einer entsprechend zugeordneten Transportspur einer Transportspülmaschine einsortiert werden kann.

Darüber hinaus lässt sich der Entladeprozess vereinfachen, da jede Spülgutgruppe auf einer definierten Transportspur bzw. einem definierten Transportband durch die bzw. eine Transportspülmaschine transportiert werden kann und somit bereits vorsortiert am Entladebereich der Transportspülmaschine ankommt.

Um das über das Zufuhrförderband des erfindungsgemäßen Beladesystems dem Beladebereich der Transportspülmaschine zugeführte Spülgut nach vorab festgelegten oder festlegbaren Spülgutgruppen sortieren zu können, ist es denkbar, dass das erfindungsgemäße Beladesystem eine Spülgutdetektorvorrichtung aufweist, welche dazu dient, die Art der über das Zufuhrförderband zugeführten Spülgutteile (Teller, Tassen, Schälchen, etc.) zu erfassen und dann dediziert mit dem mindestens einen Parallelgreifer eine bestimmte Spülgutart von dem Zufuhrförderband abzuheben und in eine entsprechende Transportspur einer Transportspülmaschine einzusortieren.

Unter dem hierin verwendeten Begriff "Spülgutdetektorvorrichtung" ist jedwede Detektionsvorrichtung zu verstehen, welche ausgelegt ist, die Art des über das Zufuhrförderband zugeführten Spülguts zu erfassen bzw. zu bestimmen. Denkbar hierbei ist es insbesondere, dass die Spülgutdetektorvorrichtung wenigstens eine Detektoreinrichtung aufweist, mit welcher die Größe, die Formgebung und/oder das Material der über das Zufuhrförderband zugeführten Spülgutteile erfasst werden können/kann.

Gemäß denkbaren Realisierungen kann die Spülgutdetektorvorrichtung wenigstens eine vorzugsweise optisch induktiv oder kapazitiv arbeitende Detektoreinrichtung aufweisen, sodass zur Identifizierung der Spülgutart die Größe, die Formgebung und/oder das Material des entsprechenden Spülgutteils erfasst werden können/kann. Als Detektoreinrichtungen kommen aber auch andere Detektortypen in Frage, wie beispielsweise induktiv arbeitende Näherungssensoren, Lichttaster, Lichtvorhänge, Laserscanner, 3D-Laser, Kameras, Drehgeber, etc.

Dadurch, dass das Greifersystem der Beladeanordnung mindestens einen Parallelgreifer aufweist, ist sichergestellt, dass - mit Ausnahme von Besteckteilen - nahezu alle anderen Spülgutarten entsprechend manipuliert, d. h. insbesondere von dem Zufuhrförderband abgenommen und in eine vorzugsweise vorab festgelegte Transportspur einer Transportspülmaschine einsortiert werden können.

Im Unterschied zu Greifzangen beruht das Wirkprinzip von Parallelgreifern darauf, dass dieser mindestens zwei Spannbacken/zwei Greiffinger aufweist, die relativ zueinander in einer linearen Bewegung bewegbar sind. Beispielsweise ist es in diesem Zusammenhang denkbar, dass mindestens eine der mindestens zwei Spannbacken/Greiffinger des Parallelgreifers durch eine Art "Tauchkolben" bewegbar bzw. antreibbar sind.

Alternativ hierzu ist es aber auch denkbar, als elektromotorischen Antrieb einen Linearantrieb zu wählen. Alternativ hierzu kann auch ein von einem elektromotorischen Antrieb bedarfsweise erzeugtes Drehmoment über eine Getriebeanordnung auf die mindestens eine Spannbacke/den mindestens einen Greiffinger übertragen werden.

Um die Zuverlässigkeit des Parallelgreifers zu optimieren, ist bei Ausführungsformen der vorliegenden Erfindung vorgesehen, dass das Greifersystem bzw. der mindestens eine zum Greifersystem gehörende Parallelgreifer mit einer Sensorik versehen ist, mit welcher die richtige relative Lage eines Spülgutteils zu dem Greifbereich des Parallelgreifers und die Anwesenheit eines Spülgutteils erfasst bzw. erkannt werden kann, eine korrekte Manipulation des Spülgutteils durch den Parallelgreifer kontrolliert werden kann, oder entsprechende Bearbeitungsparameter geprüft werden können.

Ein wesentlicher Beitrag zum Stand der Technik ist darin zu sehen, dass mindestens eine der mindestens zwei Spannbacken des Parallelgreifers segmentiert ist.

Mit anderen Worten, die mindestens eine (segmentierte) Spannbacke besteht aus mindestens zwei Abschnitten (Segmenten), welche relativ zueinander bewegbar und insbesondere verschwenkbar sind. Durch diese Unterteilung ist die (segmentierte) Spannbacke an die Oberflächenkontur eines von dem mindestens einen Parallelgreifer zu greifenden Spülgutteils variabel anpassbar.

Für besonders sensible Spülgutteile, wie beispielsweise Weingläser, etc., ist eine feinere Segmentierung der mindestens einen Spannbacke von Vorteil, damit dieses Spülgutteil mit Hilfe des Parallelgreifers hauptsächlich über Formpaarung manipuliert werden kann. Allerdings ist die Erfindung nicht auf Parallelgreifer beschränkt, bei denen mindestens eine Spannbacke in mehr als zwei Abschnitte segmentiert ist.

Vorzugsweise sind die mindestens zwei Segmente der segmentierten Spannbacke über einen Gelenkbereich und insbesondere Drehgelenkbereich derart verbunden, dass die Segmente oder zumindest eines der Segmente der mindestens einen segmentierten Spannbacke insbesondere bedarfsweise in Richtung des Greifbereichs und/oder in der entgegengesetzten Richtung bewegbar und insbesondere verschwenkbar ist.

Gemäß einer bevorzugten Realisierung der erfindungsgemäßen Lösung ist vorgesehen, dass der mindestens eine Parallelgreifer des Greifersystems der Beladeanordnung ein Greifergehäuse aufweist, in welchem zumindest bereichsweise ein Antrieb für mindestens eine der mindestens zwei Spannbacken des Parallelgreifers aufgenommen oder aufnehmbar ist. Dabei ist dem Antrieb ein relativ zu dem Greifergehäuse bewegbares und insbesondere verschiebbares Schlittenelement zugeordnet.

Bei dieser Ausführungsform ist insbesondere vorgesehen, dass die mindestens eine segmentierte Spannbacke des Parallelgreifers mit dem relativ zu dem Greifergehäuse bewegbaren und insbesondere verschiebbaren Schlittenelement relativ zu dem Gehäuse bewegbar und insbesondere verschiebbar ist.

Vorzugsweise weist der Parallelgreifer zusätzlich zu der mindestens einen segmentierten Spannbacke eine insbesondere als Greiffinger ausgebildete Spannbacke auf, die starr mit dem Greifergehäuse verbunden ist.

In diesem Zusammenhang bedeutet der Ausdruck "starr mit dem Greifergehäuse verbunden", dass diese insbesondere als Greiffinger ausgebildete Spannbacke bei Betätigung des Schlittenelements nicht relativ zu dem Greifergehäuse bewegt und insbesondere verschoben wird.

Gemäß alternativen Ausführungsformen ist jeder Spannbacke des Parallelgreifers ein Schlittenelement zugeordnet, so dass bedarfsweise jede Spannbacke relativ zu dem Greifergehäuse und relativ zu den anderen Spannbacken bewegbar und insbesondere verschiebbar ist.

Grundsätzlich ist es von Vorteil, dass die mindestens zwei Spannbacken des Parallelgreifers eine selbstzentrierende Funktion aufweisen. Um dies in einer besonders einfachen aber dennoch effektiven Weise zu realisieren, ist gemäß Ausführungsvarianten des erfindungsgemäßen Beladesystems vorgesehen, dass der Parallelgreifer mindestens zwei und vorzugsweise genau zwei insbesondere als Greiffinger ausgebildete Spannbacken aufweist, die jeweils starr mit dem Greifergehäuse verbunden sind, und die nebeneinander auf einer senkrecht zur Bewegungsrichtung des Schlittenelements verlaufenden Linie angeordnet sind.

Durch diese einfach zu realisierende Umsetzung des Parallelgreifers ist sichergestellt, dass ein Spülgutteil über eine Drei-Punkt-Lagerung von den Spannbacken des Parallelgreifers erfasst wird. Dadurch, dass sich zumindest die segmentierte Spannbacke des Parallelgreifers relativ zu den anderen als Greiffinger ausgebildeten Spannbacken und relativ zu dem von dem Greifersystem zu greifenden Spülgutteil bewegen lässt, ist automatisch eine selbstzentrierende Funktion realisierbar.

Gemäß einer alternativen Ausführungsvariante ist vorgesehen, dass der mindestens eine Parallelgreifer ein Greifergehäuse aufweist, in welchem zumindest bereichsweise ein Antrieb für mindestens eine der mindestens zwei Spannbacken des Parallelgreifers aufgenommen oder aufnehmbar ist, wobei dem Antrieb eine relativ zu dem Greifergehäuse bewegbares und insbesondere verschiebbares Schlittenelement zugeordnet ist. Bei dieser alternativen Ausführungsvariante ist die mindestens eine segmentierte Spannbacke starr mit dem Greifergehäuse verbunden, während mindestens eine weitere Spannbacke des Parallelgreifers, die vorzugsweise als Greiffinger ausgebildet ist, mit dem Schlittenelement relativ zu dem Greifergehäuse bewegbar und insbesondere verschiebbar ist.

Um auch bei dieser Ausführungsvariante eine selbstzentrierende Funktion des Parallelgreifers realisieren zu können, ist gemäß Weiterbildungen der zuletzt genannten Ausführungsvariante vorgesehen, dass der Parallelgreifer mindestens zwei und vorzugsweise genau zwei weitere und insbesondere als Greiffinger ausgebildete Spannbacken aufweist, die jeweils mit dem Schlittenelement relativ zu dem Greifergehäuse bewegbar und insbesondere verschiebbar sind, wobei die mindestens zwei und vorzugsweise genau zwei weiteren als Greiffinger ausgebildeten Spannbacken nebeneinander auf einer senkrecht zur Bewegungsrichtung des Schlittenelements verlaufenden Linie angeordnet sind.

Zur Realisierung der mindestens einen segmentierten Spannbacke des Parallelgreifers kommen verschiedene Lösungen in Frage.

Gemäß einer Ausführungsvariante ist die mindestens eine segmentierte Spannbacke als Winkelgreifer und insbesondere als Einzelfinger-Winkelgreifer mit einem Greiffinger ausgeführt, wobei der Greiffinger des Winkelgreifers bedarfsweise in den Greifbereich des Parallelgreifers einschwenkbar und aus dem Greifbereich des Parallelgreifers ausschwenkbar ist.

Selbstverständlich ist es in diesem Zusammenhang denkbar, dass der Greiffinger des Winkelgreifers mehrere miteinander über jeweils einen Gelenkbereich relativ zueinander verschwenkbare Segmente/Greiffinger aufweist.

Bei den zuletzt genannten Ausführungsvarianten, bei denen die mindestens eine segmentierte Spannbacke als Winkelgreifer und insbesondere als Einzelfinger-Winkelgreifer mit einem Greiffinger ausgeführt ist, handelt es sich im Prinzip um eine Hybridlösung, nämlich einer Kombination aus einem Parallelgreifer und einem Winkelgreifer. Durch diese Hybridlösung ist der Anwendungsbereich des Parallelgreifers deutlich erweitert, da mit dem Parallelgreifer unterschiedliche Arten von Spülgutteilen und insbesondere Spülgutteile unterschiedlicher Oberflächenkonturen sicher erfasst werden kann.

Der Winkelgreifer weist vorzugsweise ein erstes Segment/einen ersten Bereich auf, welcher mit dem Greifergehäuse des Parallelgreifers entweder starr verbunden ist oder über das Schlittenelement des Parallelgreifers relativ zu dem Greifergehäuse des Parallelgreifers in Richtung des Greifbereichs oder in entgegengesetzter Richtung bewegbar ist. An diesem ersten Segment ist ein verschwenkbar angelenkter Greiffinger (zweites Segment) vorgesehen, welcher mit einem dem Winkelgreifer zugeordneten Antrieb derart wirkgekoppelt ist, dass er durch Betätigung des Antriebs wahlweise und vorzugsweise variabel zwischen einer ersten Position, beispielsweise parallel zum Greifbereich des Parallelgreifers, und einer zweiten Position insbesondere schräg oder quer zu der ersten Position in Richtung des Greifbereichs verschwenkbar ist.

Zur Realisierung der mindestens einen segmentierten Spannbacke des Parallelgreifers ist es gleichwohl denkbar, dass die mindestens eine segmentierte Spannbacke des mindestens einen Parallelgreifers ausgebildet ist, dass durch Fluidbeaufschlagung und vorzugsweise Druckluftbeaufschlagung mindestens einer Druckluftkammer, die vorzugsweise zumindest bereichsweise in der segmentierten Spannbacke ausgebildet ist, zumindest ein Segment der segmentierten Spannbacke insbesondere bedarfsweise in Richtung des Greifbereichs und/oder in der entgegengesetzten Richtung bewegbar und insbesondere verschwenkbar ist.

Um die Funktionsweise des Winkelgreifers zu optimieren, ist gemäß Ausführungsvarianten vorgesehen, dass an dem Greiffinger des Winkelgreifers eine Sensorik vorgesehen ist, welche die Auslenkung des Greiffingers relativ zu dem ersten Segment des Winkelgreifers erfasst und/oder einen mit dem Greiffinger auf ein Spülgutteil ausgeübten Druck erfasst.

Erfindungsgemäß ist vorgesehen, dass die mindestens eine segmentierte Spannbacke einen in Richtung des Greifbereichs des Parallelgreifers vorgespannten, insbesondere elastischen und vorzugsweise federelastischen Bereich aufweist, welcher beim Greifen eines Spülgutteils gegen die Vorspannung an das Spülgutteil andrückt.

Durch das Vorsehen eines derartigen elastischen und insbesondere federelastischen Bereichs ist eine optimale Formpaarung realisierbar, und zwar bei Spülgutteilen einer Vielzahl unterschiedlicher Art, wobei gleichzeitig durch Einstellen der Vorspannkraft des elastischen Bereichs eine maximal auf das Spülgutteil einwirkende Haltekraft einstellbar ist bzw. begrenzbar ist.

In vorteilhafter Weise weist der vorgespannte Bereich der segmentierten Spannbacke zumindest bereichsweise eine im Hinblick auf den Greifbereich des Parallelgreifers konvexe Formgebung auf.

Gemäß Ausführungsformen des erfindungsgemäßen Beladesystems ist vorgesehen, dass die Spannbacken des Parallelgreifers zumindest bereichsweise mit einem elastischen Material überzogen sind.

Durch das Überziehen der Spannbacken mit einem elastischen Material wird gewährleistet, dass ein zu greifendes Spülgutteil, welches zwischen den mindestens zwei Spannbacken des Parallelgreifers gegriffen wird, nicht beschädigt wird und/oder dass die Spannbacken geschützt werden. Dies ist insbesondere dann von Vorteil, wenn Spülgutteile gegriffen werden sollen, die besonders sensibel reagieren, wie beispielsweise Gläser.

In vorteilhafter Weise sind die Spannbacken des Parallelgreifers zumindest bereichsweise mit einem Elastomer überzogen. Als elastisches Material kommt auch ein hydrierter Acrylnitrilbutadien-Kautschuk (HNBR) in Frage.

HNBR-Material weist die Vorteile auf, dass dieses Material aufgrund fehlender Doppelbindungen sehr reaktionsträge ist. Somit ist die Haltbarkeit des Materials erhöht. Außerdem ist HNBR-Material relativ temperaturbeständig, wodurch die mit HNBR überzogenen Spannbacken bis beispielsweise einer Temperatur von 150°C betrieben werden können bzw. mit Spülgutteilen in Kontakt gebracht werden können, die eine Temperatur von bis zu 150°C aufweisen.

Insbesondere ist es denkbar, dass zum Ausbilden eines Überzugs aus elastischem Material das elastische Material auf die Spannbacken aufvulkanisiert wird oder dass die Spannbacken durch ein Spritzgussverfahren mit dem elastischen Material umformt werden.

Ein Aufvulkanisieren bedeutet insbesondere, dass eine Zwischenlage zwischen dem elastischen Material und dem Material der Spannbacke vorgesehen ist. Bei der Zwischenlage handelt es sich um ein geeignetes Bindemittel, um eine fest Verbindung des elastischen Materials mit dem Material der Spannbacke zu ermöglichen und insbesondere ein Poröswerden des elastischen Materials zu verhindern.

Bei einem Umformen der Spannbacke mit einem elastischen Material kommt vorzugsweise ein Spritzgussverfahren zum Einsatz, wobei hierbei die Spannbacke in eine Form eingebracht wird und das elastische Material in einem fluiden Zustand in die Form eingegossen wird, so dass das elastische Material einen Hohlraum zwischen der Spritzgussform und der Spannbacke ausfüllt. Das elastische Material härtet daraufhin in der Form aus. Hierauf folgend kann die Form entfernt werden und die vom elastischen Material umformte Spannbacke entnommen werden.

Gemäß Weiterbildungen des zuletzt genannten Aspekts ist vorgesehen, dass die Spannbacken des Parallelgreifers jeweils mindestens eine Querbohrung aufweisen. Durch die mindestens eine Querbohrung im Bereich der Spannbacken wird erreicht, dass der Halt des elastischen Materials beim Überziehen der Spannbacken mit dem elastischen Material verbessert wird. Insbesondere ist der Halt des elastischen Materials an den Spannbacken verbessert und zwar im Vergleich zu einem Fall, bei welchem die Spannbacken nicht weiter strukturiert oder modifiziert, d.h. im Wesentlichen glatt sind. Insbesondere ist dabei vorgesehen, dass das elastische Material die mindestens eine Querbohrung überdeckt.

Die Erfindung ist keinesfalls auf Beladesysteme beschränkt, bei denen mindestens ein Parallelgreifer mit nur zwei Spannbacken zum Einsatz kommt. Vielmehr betrifft die Erfindung auch Beladesysteme mit Parallelgreifern, die jeweils insgesamt drei Spannbacken aufweisen, welche relativ zueinander und relativ zu einem von dem Greifersystem zu greifenden Spülgutteil bewegbar sind, wobei eine Bewegung der drei Spannbacken vorzugsweise synchronisiert ist.

In vorteilhafter Weise sind die Spannbacken des Parallelgreifers ausgebildet, ein zu greifendes Spülgutteil über Reib- und/oder Formschluss zu greifen.

Darüber hinaus ist gemäß bevorzugten Realisierungen des erfindungsgemäßen Beladesystems vorgesehen, dass zum Betätigen von mindestens einer der mindestens zwei Spannbacken des Parallelgreifers dem Parallelgreifer ein elektromotorischer Antrieb mit einer Selbsthemmung zugeordnet ist, wobei die Selbsthemmung derart ausgeführt ist, dass der elektromotorische Antrieb in einem spannungsfreien Zustand einen relativen Abstand der Spannbacken zueinander fixiert.

Die Erfindung betrifft ferner ein Greifersystem für eine Beladeanordnung zum automatischen Beladen einer Spülmaschine mit Spülgutteilen, wobei das Greifersystem einen Parallelgreifer mit mindestens zwei relativ zueinander bewegbaren und insbesondere verschiebbaren Greifbacken aufweist, wobei mindestens eine der Greifbacken als Einzelfinger-Winkelgreifer ausgeführt ist.

Bei diesem erfindungsgemäßen Greifersystem sind die zuvor im Zusammenhang mit dem Beladesystem genannten Weiterbildungen ebenfalls denkbar.

Des Weiteren betrifft die Erfindung eine Transportspülmaschine mit mindestens einer Transportvorrichtung, vorzugsweise in Gestalt mindestens eines Transportbandes, wobei die Transportspülmaschine bei ihrem Einlaufbereich mit mindestens einem Beladesystem der zuvor beschriebenen erfindungsgemäßen Art versehen ist zum vorzugsweise automatischen Einstellen von Spülgut in die Transportvorrichtung der Transportspülmaschine.

Nachfolgend werden unter Bezugnahme auf die beiliegenden Zeichnungen exemplarische Ausführungsformen der erfindungsgemäßen Lösung näher beschrieben.

Es zeigen:
- FIG. 1: schematisch und in einer isometrischen Ansicht eine erste exemplarische Ausführungsform eines Greifersystems für eine Beladeanordnung zum automatischen Beladen einer Spülmaschine, und zwar in einem Zustand, in welchem der Parallelgreifer des Greifersystems zum Greifen eines auf einem Tablett abgestellten Tellers von der Seite an den Teller herangefahren wird;
- FIG. 2: schematisch und in einer isometrischen Ansicht das Greifersystem gemäß FIG. 1, und zwar in einem Zustand, in welchem der Parallelgreifer des Greifersystems den Teller gegriffen hat;
- FIG. 3: schematisch und in einer Schnittansicht das Greifersystem gemäß FIG. 2;
- FIG. 4: schematisch und in einer isometrischen Ansicht die erste exemplarische Ausführungsform des erfindungsgemäßen Greifersystems, und zwar in einem Zustand, in welchem von dem Parallelgreifer des Greifersystems ein auf einem Tablett abgestelltes Schälchen gegriffen werden soll und der Parallelgreifer von oben an das Schälchen herangefahren wird;
- FIG. 5: schematisch und in einer isometrischen Ansicht das Greifersystem gemäß FIG. 4, und zwar in einem Zustand, in welchem der Parallelgreifer des Greifersystems das Schälchen gegriffen hat;
- FIG. 6: schematisch und in einer Seitenansicht das Greifersystem gemäß FIG. 5;
- FIG. 7: schematisch und in einer isometrischen Ansicht eine zweite exemplarische Ausführungsform des erfindungsgemäßen Greifersystems, und zwar in einem Zustand, in welchem der Parallelgreifer des Greifersystems an einen auf einem Tablett abgestellten Teller von der Seite her herangefahren wird;
- FIG. 8: schematisch und in einer teilgeschnittenen Ansicht das Greifersystem gemäß FIG. 7, und zwar in einem Zustand, in welchem der Parallelgreifer des Greifersystems den Teller gegriffen hat;
- FIG. 9: schematisch und in einer isometrischen Ansicht die zweite exemplarische Ausführungsform des erfindungsgemäßen Greifersystems, und zwar in einem Zustand, in welchem der Parallelgreifer des Greifersystems von oben an ein auf einem Tablett abgestelltes Schälchen herangefahren wird;
- FIG. 10: schematisch und in einer teilgeschnittenen Ansicht das Greifersystem gemäß FIG. 9, und zwar in einem Zustand, in welchem der Parallelgreifer des Greifersystems das Schälchen gegriffen hat;
- FIG. 11: schematisch und in einer isometrischen Ansicht eine dritte exemplarische Ausführungsform des erfindungsgemäßen Greifersystems, und zwar in einem Zustand, in welchem der Parallelgreifer des Greifersystems von oben an ein auf einem Tablett abgestelltes Schälchen herangefahren wird; und
- FIG. 12: schematisch und in einer isometrischen Ansicht die dritte exemplarische Ausführungsform des erfindungsgemäßen Greifersystems, und zwar in einem Zustand, in welchem der Parallelgreifer des Greifersystems an einen auf einem Tablett abgestellten Teller von der Seite her herangefahren wird.

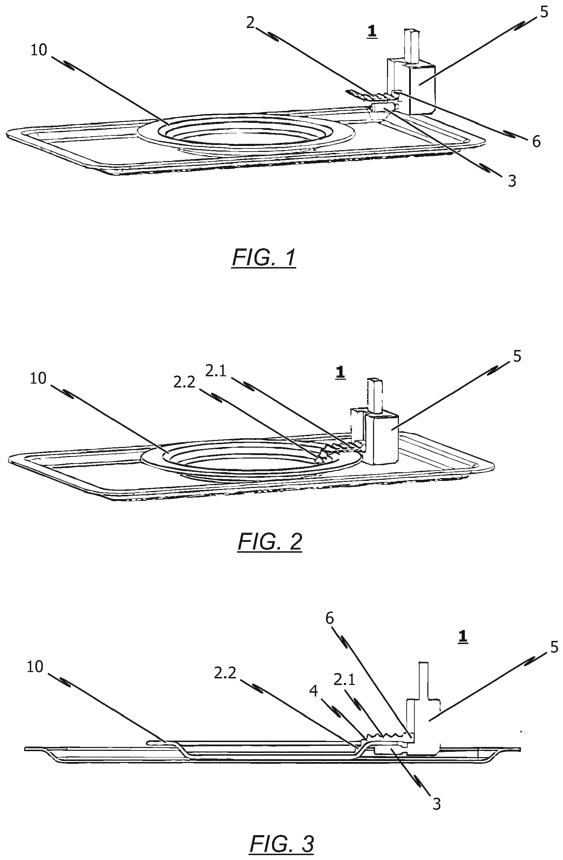

Nachfolgend werden unter Bezugnahme auf die Darstellungen in FIG. 1 bis FIG. 12 verschiedene Ausführungsform des zu dem Greifersystem der Beladeanordnung gehörenden Parallelgreifers 1 beschrieben.

Alle Ausführungsformen haben gemeinsam, dass das Greifersystem der Beladeanordnung einen Parallelgreifer 1 aufweist, wobei mindestens eine Spannbacke 2, 3 des Parallelgreifers 1 als segmentierte Spannbacke 2 ausgeführt ist, die es erlaubt, dass diese Spannbacke 2 zumindest bereichsweise an eine Oberflächenkontur eines von dem Parallelgreifer 1 zu greifenden Spülgutteils 10, 11 anpassbar ist.

Im Einzelnen ist bei den in den Zeichnungen gezeigten Ausführungsformen der erfindungsgemäßen Lösung vorgesehen, dass die mindestens eine segmentierte Spannbacke 2 des Parallelgreifers 1 in mindestens zwei und vorzugsweise mehr als zwei relativ zueinander bewegbare und insbesondere verschwenkbare Segmente 2.1, 2.2 unterteilt ist, wobei jedes Segment 2.1, 2.2 mit einem benachbarten Segment 2.2, 2.1 über einen Gelenkbereich 4 und insbesondere Drehgelenkbereich derart verbunden ist, dass die Segmente 2.1, 2.2 der segmentierten Spannbacke 2 insbesondere bedarfsweise in Richtung des Greifbereichs und/oder in der entgegengesetzten Richtung bewegbar und insbesondere verschwenkbar ist.

Die in FIG. 1 bis FIG. 6 gezeigte Ausführungsform des Parallelgreifers 1 zeichnet sich dadurch aus, dass der Parallelgreifer 1 ein Greifergehäuse 5 aufweist, in welchem zumindest bereichsweise ein Antrieb für mindestens eine der mindestens zwei Spannbacken 2, 3 des Parallelgreifers 1 aufgenommen oder aufnehmbar ist.

Dabei ist dem Antrieb ein relativ zu dem Greifergehäuse 5 bewegbares und insbesondere verschiebbares Schlittenelement 6 zugeordnet, wobei die segmentierte Spannbacke 2 mit dem Schlittenelement 6 relativ zu dem Greifergehäuse 5 bewegbar und insbesondere verschiebbar ist.

Die andere (nicht segmentierte) Spannbacke 3 des Parallelgreifers 1 ist dabei als Greiffinger ausgebildet, der starr mit dem Greifergehäuse 5 des Parallelgreifers 1 verbunden ist.

Indem einerseits das Schlittenelement 6 des Parallelgreifers 1 geeignet angesteuert wird, kann der realisierbare Greifbereich des Parallelgreifers 1 variiert werden. Indem andererseits die mit dem Schlittenelement 6 bewegbare Spannbacke als segmentierte Spannbacke 2 ausgebildet ist, ist es möglich, dass im gegriffenen Zustand diese Spannbacke 2 zumindest bereichsweise an eine Oberflächenkontur eines von dem Parallelgreifer 1 gegriffenen Spülgutteils 10, 11 automatisch bzw. selbstständig anpassbar ist.

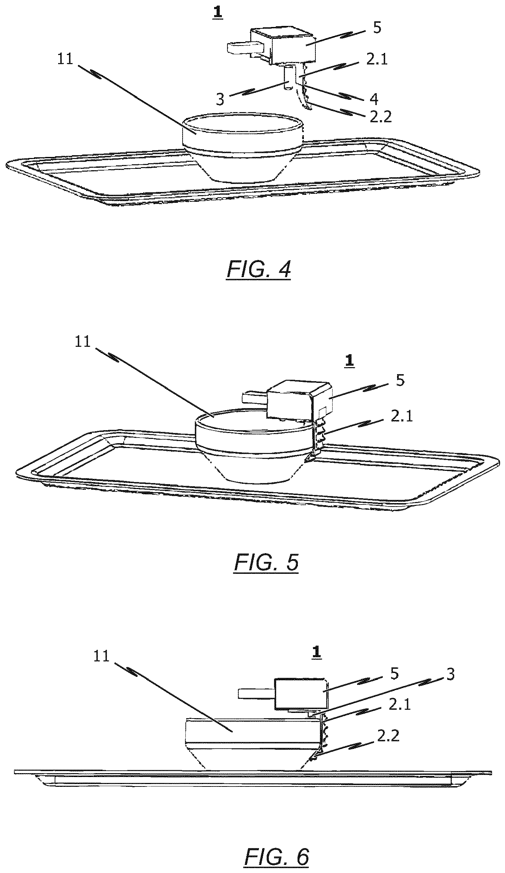

Einerseits eignet sich der Parallelgreifer 1 dazu, beispielsweise flache Geschirrteile wie beispielsweise Teller 10 oder Untertassen, zu manipulieren (vgl. FIG. 1 bis FIG. 3), während durch eine 90°-Drehung des Parallelgreifers 1 auch der Rand von Schälchen 11, Tassen oder anderen Töpfen gegriffen werden kann, wie es in FIG. 4 bis FIG. 6 angedeutet ist.

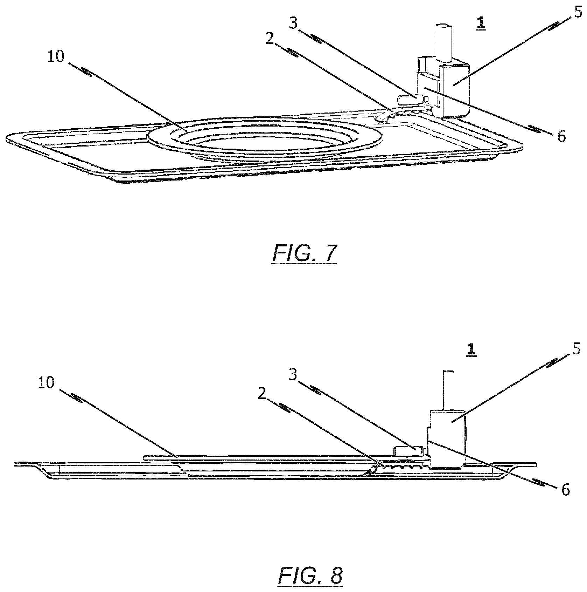

Die in FIG. 7 bis FIG. 10 gezeigte zweite Ausführungsvariante zeichnet sich dadurch aus, dass der (nicht-segmentierte) Greiffinger 3 des Parallelgreifers 1 mit dem Schlittenelement 6 relativ zu dem Greifergehäuse 5 bewegbar und insbesondere verschiebbar ist, während andererseits die segmentierte Spannbacke 2 starr mit dem Greifergehäuse 5 verbunden ist.

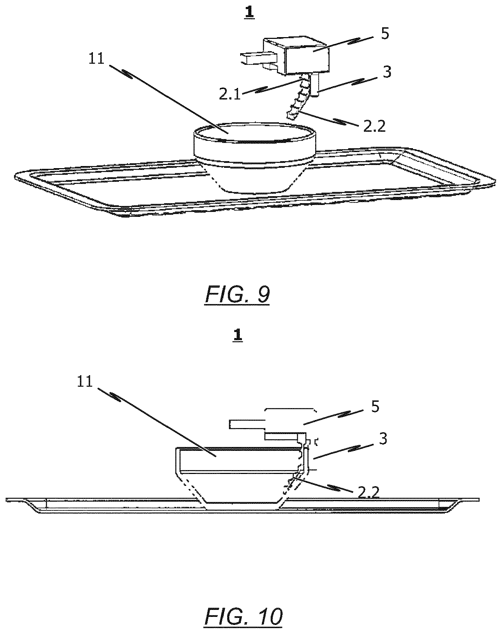

Auch bei dieser Ausführungsform ist eine Vielzahl unterschiedlicher Spülgutarten sicher manipulierbar. Im Einzelnen ist in FIG. 7 und FIG. 8 gezeigt, wie bei der zweiten Ausführungsform flache Spülgutteile, insbesondere Teller 10, manipuliert werden können, während in FIG. 9 und FIG. 10 gezeigt ist, dass mit ein und demselben Parallelgreifer 1 auch andere Spülgutarten, insbesondere Schälchen 11, Tassen etc. manipuliert werden können.

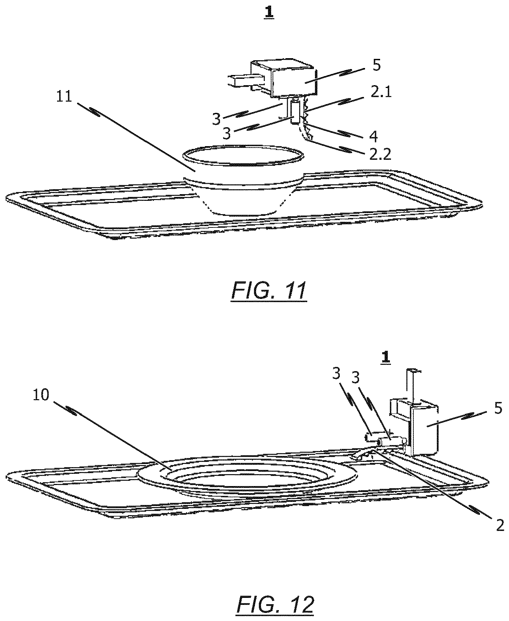

Die in FIG. 11 und FIG. 12 gezeigte weitere Ausführungsvariante zeichnet sich dadurch aus, dass insgesamt zwei nicht-segmentierte Spannbacken 3 jeweils in Gestalt eines Greiffingers vorgesehen sind, wobei diese beiden Greiffinger mit dem Schlittenelement 6 relativ zu dem Greifergehäuse 5 bewegbar und insbesondere verschiebbar sind. Insbesondere sind die beiden weiteren als Greiffinger ausgebildeten Spannbacken 3 nebeneinander auf einer senkrecht zur Bewegungsrichtung des Schlittenelements 6 verlaufenden Linie angeordnet.

Die Erfindung ist nicht auf die in den Zeichnungen gezeigten Ausführungsvarianten beschränkt, sondern ergibt sich aus der Offenbarung des Anspruchs 1.

Insbesondere ist es in diesem Zusammenhang auch denkbar, dass an gegenüberliegenden Seiten des Greifergehäuses 5 entsprechende starre bzw. flexible/segmentierte Spannbacken 2, 3 angeordnet sind, um so unterschiedliche Greifbereiche realisieren zu können.

Die Erfindung betrifft ferner eine in den Zeichnungen nicht gezeigte Transportspülmaschine mit mindestens einer Transportvorrichtung, vorzugsweise in Gestalt mindestens eines Transportbandes, wobei die Transportspülmaschine bei ihrem Einlaufbereich mit mindestens einem Beladebereich versehen ist zum vorzugsweise automatischen Einstellen von Spülgut in die Transportvorrichtung der Transportspülmaschine. Dabei weist das Beladesystem mindestens einen Parallelgreifer 1 der zuvor beschriebenen Art auf.

## Patentansprüche

1. System zum Beladen einer Spülmaschine, welche als insbesondere gewerbliche Transportspülmaschine ausgeführt ist, wobei das System eine Beladeanordnung aufweist zum automatischen Beladen der Transportspülmaschine mit Spülgut, wobei die Beladeanordnung ein Greifersystem mit mindestens einem Parallelgreifer (1) aufweist, wobei der mindestens eine Parallelgreifer (1) mindestens zwei Spannbacken (2, 3) aufweist, zwischen denen ein Greifbereich des Parallelgreifers (1) definiert wird, wobei mindestens eine der mindestens zwei Spannbacken (2, 3) derart segmentiert ist, dass die mindestens eine Spannbacke (2) zumindest bereichsweise an eine Oberflächenkontur eines von dem mindestens einen Parallelgreifer (1) zu greifenden Spülgutteils vorzugsweise automatisch und/oder selbständig anpassbar ist,
**dadurch gekennzeichnet, dass**
die mindestens eine segmentierte Spannbacke (2) einen in Richtung des Greifbereichs des Parallelgreifers (1) vorgespannten Bereich aufweist, welcher beim Greifen eines Spülgutteils gegen die Vorspannung an das Spülgutteil (10, 11) andrückt.

2. System nach Anspruch 1,
wobei die mindestens eine segmentierte Spannbacke (2) des mindestens einen Parallelgreifers (1) in mindestens zwei und vorzugsweise in mehr als zwei relativ zueinander bewegbare und insbesondere verschwenkbare Segmente (2.1, 2.2) unterteilt ist, wobei jedes Segment (2.1, 2.2) mit einem benachbarten Segment (2.2, 2.1) über einen Gelenkbereich (4) und insbesondere Drehgelenkbereich derart verbunden ist, dass die Segmente (2.1, 2.2) der mindestens einen segmentierten Spannbacke (2) insbesondere bedarfsweise in Richtung des Greifbereichs und/oder in der entgegengesetzten Richtung bewegbar und insbesondere verschwenkbar sind.

3. System nach Anspruch 1 oder 2,
wobei der mindestens eine Parallelgreifer (1) ein Greifergehäuse (5) aufweist, in welchem zumindest bereichsweise ein Antrieb für mindestens eine der mindestens zwei Spannbacken (2, 3) aufgenommen oder aufnehmbar ist, wobei dem Antrieb ein relativ zu dem Greifergehäuse (5) bewegbares und insbesondere verschiebbares Schlittenelement (6) zugeordnet ist, wobei die mindestens eine segmentierte Spannbacke (2) mit dem Schlittenelement (6) relativ zu dem Greifergehäuse (4) bewegbar und insbesondere verschiebbar ist, und wobei der Parallelgreifer (1) mindestens eine insbesondere als Greiffinger ausgebildete Spannbacke (3) aufweist, die starr mit dem Greifergehäuse (5) verbunden ist.

4. System nach Anspruch 3,
wobei der Parallelgreifer (1) mindestens zwei und vorzugsweise genau zwei insbesondere als Greiffinger ausgebildete Spannbacken (3) aufweist, die jeweils starr mit dem Greifergehäuse (4) verbunden sind, und die nebeneinander auf einer senkrecht zur Bewegungsrichtung des Schlittenelements (6) verlaufenden Linie angeordnet sind.

5. System nach Anspruch 1 oder 2,
wobei der mindestens eine Parallelgreifer (1) ein Greifergehäuse (5) aufweist, in welchem zumindest bereichsweise ein Antrieb für mindestens eine der mindestens zwei Spannbacken (2, 3) aufgenommen oder aufnehmbar ist, wobei dem Antrieb ein relativ zu dem Greifergehäuse (5) bewegbares und insbesondere verschiebbares Schlittenelement (6) zugeordnet ist, wobei die mindestens eine segmentierte Spannbacke (2) starr mit dem Gehäuse verbunden ist, und wobei mindestens eine weitere Spannbacke (3) des Parallelgreifers (1) mit dem Schlittenelement (6) relativ zu dem Greifergehäuse (5) bewegbar und insbesondere verschiebbar ist.

6. System nach Anspruch 5,
wobei der Parallelgreifer (1) mindestens zwei und vorzugsweise genau zwei weitere und insbesondere als Greiffinger ausgebildete Spannbacken (3) aufweist, die jeweils mit dem Schlittenelement (6) relativ zu dem Greifergehäuse (5) bewegbar und insbesondere verschiebbar sind, wobei die mindestens zwei und vorzugsweise genau zwei weiteren als Greiffinger ausgebildete Spannbacken (3) nebeneinander auf einer senkrecht zur Bewegungsrichtung des Schlittenelements (6) verlaufenden Linie angeordnet sind.

7. System nach einem der Ansprüche 1 bis 6,
wobei die mindestens eine segmentierte Spannbacke (2) als Winkelgreifer und insbesondere als Einzelfinger-Winkelgreifer mit einem Greiffinger ausgeführt ist, wobei der Greiffinger des Winkelgreifers bedarfsweise in dem Greifbereich des Parallelgreifers (1) einschwenkbar und aus dem Greifbereich des Parallelgreifers (1) ausschwenkbar ist.

8. System nach Anspruch 7,
wobei der Greiffinger des Winkelgreifers mehrere miteinander über jeweils einen Gelenkbereich relativ zueinander verschwenkbare Segmente (2.1, 2.2) aufweist.

9. System nach einem der Ansprüche 1 bis 8,
wobei der in Richtung des Greifbereichs des Parallelgreifers (1) vorgespannte Bereich ein elastischer und vorzugsweise federelastischer Bereich ist, wobei vorzugsweise der vorgespannte Bereich der segmentierten Spannbacke (2) insbesondere zumindest bereichsweise eine im Hinblick auf den Greifbereich des Parallelgreifers (1) konvexe Formgebung aufweist.

10. System nach einem der Ansprüche 1 bis 9,
wobei die mindestens eine segmentierte Spannbacke (2) des mindestens einen Parallelgreifers (1) ausgebildet ist, dass durch Fluidbeaufschlagung und vorzugsweise Druckluftbeaufschlagung mindestens einer Druckluftkammer, die vorzugsweise zumindest bereichsweise in der segmentierten Spannbacke (2) ausgebildet ist, zumindest ein Segment der segmentierten Spannbacke (2) insbesondere bedarfsweise in Richtung des Greifbereichs und/oder in der entgegengesetzten Richtung bewegbar und insbesondere verschwenkbar ist.

11. System nach einem der Ansprüche 1 bis 10,
wobei die Spannbacken (2, 3) des Parallelgreifers (1) zumindest bereichsweise mit einem elastischen Material überzogen sind.

12. System nach einem der Ansprüche 1 bis 11,
wobei die Spannbacken (2, 3) des Parallelgreifers (1) ausgebildet sind, ein zu greifendes Spülgutteil (10, 11) über Reib- und/oder Formschluss zu greifen.

13. System nach einem der Ansprüche 1 bis 12,
wobei dem Parallelgreifer (1) ein elektromotorischer Antrieb zugeordnet ist zum bedarfsweisen Manipulieren von mindestens einer der mindestens zwei Spannbacken (2, 3), wobei der elektromotorische Antrieb derart mit einer Selbsthemmung versehen ist, dass der elektromotorische Antrieb in einem spannungsfreien Zustand einen relativen Abstand der Spannbacken (2, 3) zueinander fixiert.

14. Transportspülmaschine mit mindestens einer Transportvorrichtung, vorzugsweise in Gestalt mindestens eines Transportbands, wobei die Transportspülmaschine bei ihrem Einlaufbereich mit mindestens einem System nach einem der Ansprüche 1 bis 13 versehen ist zum vorzugsweise automatischen Einstellen von Spülgut in die Transportvorrichtung der Transportspülmaschine.

## Claims

1. A system for loading a warewasher, which is embodied as a commercial conveyor warewasher, in particular, wherein the system comprises a loading arrangement for automatic loading of the conveyor warewasher with washware, wherein the loading arrangement comprises a gripping system having at least one parallel gripper (1), wherein the at least one parallel gripper (1) comprises at least two clamping jaws (2, 3), between which a gripping region of the parallel gripper (1) is defined, wherein at least one of the at least two clamping jaws (2, 3) is segmented such that the at least one clamping jaw (2) is preferably automatically and/or independently adjustable at least in regions to a surface contour of a piece of washware to be gripped by the at least one parallel gripper (1),
**characterized in that**
the at least one segmented clamping jaw (2) comprises a region that is pretensioned towards the gripping region of the parallel gripper (1)
and, when gripping a piece of washware, presses counter to the pretensioning on the washware (10, 11).

2. The system according to claim 1,
wherein the at least one segmented clamping jaw (2) of the at least one parallel gripper (1) is divided into at least two and preferably more than two segments (2.1, 2.2), which are movable and in particular pivotable relative to one another, wherein each segment (2.1, 2.2) is connected via an articulation region (4), in particular a rotational articulation region, to an adjacent segment (2.2, 2.1), such that the segments (2.1, 2.2) of the at least segmented clamping jaw (2) can be moved and in particular pivoted as needed in the direction of the gripping region and/or in the opposite direction.

3. The system according to claim 1 or 2,
wherein the at least one parallel gripper (1) comprises a gripper housing (5), in which, at least in regions, a drive for at least one of the at least two clamping jaws (2, 3) is received or receivable, wherein a carriage element (6), which can be moved and in particular slid relative to the gripper housing (5), is assigned to the drive, wherein the at least one segmented clamping jaw (2) is movable and in particular slidable with the carriage element (6) relative to the gripper housing (4), and wherein the parallel gripper (1) comprises at least one clamping jaw (3), in particular configured as a gripping finger, which is rigidly connected to the gripper housing (5).

4. The system according to claim 3,
wherein the parallel gripper (1) comprises at least two and preferably exactly two clamping jaws (3), which are configured in particular as gripping fingers and are each rigidly connected to the gripper housing (4) and which are arranged side-by-side on a line that is perpendicular to the direction of movement of the carriage element (6).

5. The system according to claim 1 or 2,
wherein the at least one parallel gripper (1) comprises a gripper housing (5), in which, at least in regions, a drive for at least one of the at least two clamping jaws (2, 3) is received or receivable, wherein a carriage element (6), which can be moved and in particular slid relative to the gripper housing (5), is assigned to the drive, wherein the at least one segmented clamping jaw (2) is rigidly connected to the housing, and wherein at least one further clamping jaw (3) of the parallel gripper (1) is movable and in particular slidable with the carriage element (6) relative to the gripper housing (5).

6. The system according to claim 5,
wherein the parallel gripper (1) comprises at least two and preferably exactly two further clamping jaws (3), which are configured as gripping fingers, and which are respectively moveable and in particular slidable with the carriage element (6) relative to the gripper housing (5), wherein the at least two and preferably exactly two further clamping jaws (3), which are configured as gripping fingers, are arranged side-by-side on a line that is perpendicular to the direction of movement of the carriage element (6).

7. The system according to any of the claims 1 to 6,
wherein the at least one segmented clamping jaw (2) is embodied as an angle gripper and in particular as a single finger angle gripper with a gripping finger, wherein the gripping finger of the angle gripper is pivotable, if necessary, into the gripping region of the parallel gripper (1) and is pivotable out of the gripping region of the parallel gripper (1).

8. The system according to claim 7,
wherein the gripping finger of the angular gripper comprises a plurality of segments (2.1, 2.2) which can be pivoted relative to one another over a respective articulated region.

9. System according to any of the claims 1 to 8,
wherein the region that is pretensioned in the direction of the gripping region of the parallel gripper (1) is an elastic and preferably spring-elastic region, wherein preferably the pretensioned region of the segmented clamping jaw (2) has, at least in regions, a convex shaping with respect to the gripping region of the parallel gripper (1).

10. The system according to any of the claims 1 to 9,
wherein the at least one segmented clamping jaw (2) of the at least one parallel gripper (1) is configured such that, by fluid exposure and preferably compressed air exposure of at least one compressed air chamber, which is preferably formed at least in regions in the segmented clamping jaw (2), at least one segment of the segmented clamping jaw (2) is movable and in particular pivotable, as needed, in the direction of the gripping region and/or in the opposite direction.

11. System according to any of the claims 1 to 10,
wherein the clamping jaws (2, 3) of the parallel gripper (1) are coated with an elastic material, at least in regions.

12. System according to any of the claims 1 to 11,
wherein the clamping jaws (2, 3) of the parallel gripper (1) are configured in order to grip a piece of washware (10, 11) to be gripped via frictional and/or positive locking.

13. System according to any of the claims 1 to 12,
wherein an electromotive drive is assigned to the parallel gripper (1) in order to manipulate at least one of the at least two clamping jaws (2, 3) as needed, wherein the electromotive drive is equipped with a self-inhibition mechanism such that the electromotive drive fixes a relative distance of the clamping jaws (2, 3) to one another in a voltage-free state.

14. A conveyor warewasher having at least one conveyor apparatus,
preferably in the form of at least one conveyor belt, wherein the conveyor warewasher is equipped at its inlet area with at least one system according to any of the claims 1 to 13 for preferably automatic placement of the washware into the conveyor apparatus of the conveyor warewasher.

## Revendications

1. Système de chargement d'un lave-vaisselle, qui est conçu sous la forme d'un lave-vaisselle à transporteur commercial, en particulier, dans lequel le système comprend un agencement de chargement pour le chargement automatique du lave-vaisselle à transporteur avec de la vaisselle, dans lequel l'agencement de chargement comprend un système de préhension ayant au moins une pince parallèle (1), dans lequel l'au moins une pince parallèle (1) comprend au moins deux mâchoires de serrage (2, 3), entre lesquelles est définie une zone de préhension de la pince parallèle (1), dans lequel au moins une des au moins deux mâchoires de serrage (2, 3) est segmentée de sorte que l'au moins une mâchoire de serrage (2) est de préférence réglable automatiquement et/ou indépendamment au moins par zones sur un contour de surface d'un article de vaisselle à saisir par l'au moins une pince parallèle (1),
**caractérisé en ce que**
l'au moins une mâchoire de serrage segmentée (2) comprend une zone qui est précontrainte vers la zone de préhension de la pince parallèle (1)
et, lors de la préhension d'un article de vaisselle, exerce une pression à l'encontre de la précontrainte sur l'article de vaisselle (10, 11).

2. Système selon la revendication 1,
dans lequel l'au moins une mâchoire de serrage segmentée (2) de l'au moins une pince parallèle (1) est divisée en au moins deux et de préférence plus de deux segments (2.1, 2.2), qui sont mobiles et en particulier pivotables l'un par rapport à l'autre, dans lequel chaque segment (2.1, 2.2) est relié par une zone d'articulation (4), en particulier une zone d'articulation rotative, à un segment adjacent (2.2, 2.1), de sorte que les segments (2.1, 2.2) de la mâchoire de serrage (2) au moins segmentée peuvent être déplacés et en particulier pivotés en cas de besoin dans la direction de la zone de préhension et/ou dans la direction opposée.

3. Système selon la revendication 1 ou 2,
dans lequel l'au moins une pince parallèle (1) comprend un boîtier de pince (5), dans lequel, au moins dans des zones, un entraînement pour au moins une des au moins deux mâchoires de serrage (2, 3) est reçue ou recevable, dans lequel un élément de chariot (6), qui peut être déplacé et en particulier coulissé par rapport au boîtier de préhension (5), est attribué à l'entraînement, dans lequel l'au moins une mâchoire de serrage segmentée (2) est mobile et en particulier peut coulisser avec l'élément de chariot (6) par rapport au boîtier de pince (4), et dans lequel la pince parallèle (1) comprend au moins une mâchoire de serrage (3), en particulier configurée comme un doigt de préhension, qui est reliée rigidement au boîtier de préhension (5).

4. Système selon la revendication 3,
dans lequel la pince parallèle (1) comprend au moins deux, et de préférence exactement deux mâchoires de serrage (3), qui sont configurées en particulier comme doigts de préhension et sont chacune reliées rigidement au boîtier de pince (4) et qui sont agencées côte à côte sur une ligne qui est perpendiculaire à la direction de déplacement de l'élément de chariot (6).

5. Système selon la revendication 1 ou 2,
dans lequel l'au moins une pince parallèle (1) comprend un boîtier de pince (5), dans lequel, au moins dans des zones, un entraînement pour au moins une des au moins deux mâchoires de serrage (2, 3) est reçue ou recevable, dans lequel un élément de chariot (6), qui peut être déplacé et en particulier coulissé par rapport au boîtier de préhension (5), est attribué à l'entraînement, dans lequel l'au moins une mâchoire de serrage segmentée (2) est reliée rigidement au boîtier, et dans lequel au moins une autre mâchoire de serrage (3) de la pince parallèle (1) est mobile et en particulier peut coulisser avec l'élément de chariot (6) par rapport au boîtier de pince (5).

6. Système selon la revendication 5,
dans lequel la pince parallèle (1) comprend au moins deux et de préférence exactement deux autres mâchoires de serrage (3), qui sont configurées comme des doigts de préhension, et qui sont respectivement mobiles et en particulier coulissants avec l'élément de chariot (6) par rapport au boîtier de pince (5), dans lequel les au moins deux et de préférence exactement deux autres mâchoires de serrage (3), qui sont configurées comme des doigts de préhension, sont agencés côte à côte sur une ligne qui est perpendiculaire à la direction de déplacement de l'élément de chariot (6).

7. Système selon l'une quelconque des revendications 1 à 6, dans lequel l'au moins une mâchoire de serrage segmentée (2) est conçue sous la forme d'une pince d'angle et en particulier sous la forme d'une pince d'angle à un seul doigt avec un doigt de préhension, dans lequel le doigt de préhension de la pince d'angle peut pivoter, si nécessaire, dans la zone de préhension de la pince parallèle (1) et peut pivoter hors de la zone de préhension de la pince parallèle (1) .

8. Système selon la revendication 7,
dans lequel le doigt de préhension de la pince angulaire comprend une pluralité de segments (2.1, 2.2) qui peuvent être pivotés les uns par rapport aux autres sur une zone articulée respective.

9. Système selon l'une quelconque des revendications 1 à 8, dans lequel la zone qui est précontrainte en direction de la zone de préhension de la pince parallèle (1) est une zone élastique et de préférence élastique à ressort, dans lequel de préférence la zone précontrainte de la mâchoire de serrage segmentée (2) présente, au moins dans des zones, une forme convexe par rapport à la zone de préhension de la pince parallèle (1).

10. Système selon l'une quelconque des revendications 1 à 9, dans lequel l'au moins une mâchoire de serrage segmentée (2) de l'au moins une pince parallèle (1) est configurée de sorte que, par exposition à un fluide et de préférence exposition à de l'air comprimé d'au moins une chambre d'air comprimé, qui est de préférence formée au moins dans des zones dans la mâchoire de serrage segmentée (2), au moins un segment de la mâchoire de serrage segmentée (2) est mobile et en particulier pivotant, en cas de besoin, dans la direction de la zone de serrage et/ou dans la direction opposée.

11. Système selon l'une quelconque des revendications 1 à 10, dans lequel les mâchoires de serrage (2, 3) de la pince parallèle (1) sont revêtues d'un matériau élastique, au moins dans des zones.

12. Système selon l'une quelconque des revendications 1 à 11, dans lequel les mâchoires de serrage (2, 3) de la pince parallèle (1) sont configurées de manière à saisir un article de vaisselle (10, 11) à saisir par l'intermédiaire d'un verrouillage par friction et/ou par enclenchement.

13. Système selon l'une quelconque des revendications 1 à 12, dans lequel un entraînement à moteur électrique est attribué à la pince parallèle (1) de manière à manipuler au moins une des au moins deux mâchoires de serrage (2, 3) en cas de besoin, dans lequel l'entraînement à moteur électrique est équipé d'un mécanisme d'auto-inhibition de sorte que l'entraînement à moteur électrique fixe une distance relative des mâchoires de serrage (2, 3) l'une par rapport à l'autre dans un état sans tension.

14. Lave-vaisselle à transporteur avec au moins un dispositif de transport,
de préférence sous la forme d'au moins une bande transporteuse, dans laquelle le lave-vaisselle est équipé dans sa zone d'entrée d'au moins un système selon l'une quelconque des revendications 1 à 13 pour placer de préférence automatiquement la vaisselle dans le dispositif de transport du lave-vaisselle à transporteur.
